# EUROPÄISCHE PATENTSCHRIFT

(11) **EP 3 090 794 B1**
(45) Veröffentlichungstag und Bekanntmachung des Hinweises auf die Patenterteilung: **25.03.2020**
(21) Anmeldenummer: 16166876.9
(22) Anmeldetag: 25.04.2016
(51) Int. Cl.: B01D 33/073, B01D 33/46

(54) **VORRICHTUNG ZUR ENTFERNUNG VON VERUNREINIGUNGEN AUS EINER FLÜSSIGKEIT SOWIE VERFAHREN ZUM REINIGEN EINER ENTSPRECHENDEN VORRICHTUNG**
DEVICE FOR REMOVING IMPURITIES FROM A LIQUID, AND METHOD FOR CLEANING SUCH A DEVICE
DISPOSITIF D'ELIMINATION D'IMPURETES D'UN LIQUIDE ET PROCEDE DE NETTOYAGE DU DISPOSITIF

(30) Priorität: 06.05.2015 DE 102015107028
(43) Veröffentlichungstag der Anmeldung: 09.11.2016
(73) Patentinhaber: Huber SE, 92334 Berching (DE)
(72) Erfinder: Starcevic, Nikica, 92334 Berching (DE); Abt, Simon, 91177 Thalmässing (DE)
(74) Vertreter: Baudler, Ron

(56) Entgegenhaltungen:
- WO-A1-02/02868
- DE-B- 1 044 771
- GB-A- 2 504 120
- US-A- 4 261 831

## Beschreibung

Die vorliegende Erfindung betrifft eine Vorrichtung zur Entfernung von Verunreinigungen aus einer Flüssigkeit, vorzugsweise aus Abwasser, mit einer drehbar gelagerten und eine Filterfläche aufweisenden Filtertrommel, mit einem mit der Filtertrommel in Wirkverbindung stehenden Trommelantrieb zum Drehen der Filtertrommel um eine Drehachse, mit einem Reinigungssystem zum Reinigen der Filterfläche, wobei das Reinigungssystem eine, vorzugsweise als Linearführung ausgebildete, Führung sowie eine entlang der Führung mit Hilfe eines Antriebs hin und her bewegbare Spritzdüsenanordnung aufweist, über das eine Reinigungsflüssigkeit auf die Filterfläche aufspritzbar ist.

Des Weiteren wird ein Verfahren zum Reinigen der Filterfläche einer drehbar gelagerten Filtertrommel vorgeschlagen, die der Entfernung von Verunreinigungen aus einer Flüssigkeit, vorzugsweise aus Abwasser, dient, wobei die Filtertrommel mit Hilfe eines Trommelantriebs um eine Drehachse gedreht wird, wobei eine Spritzdüsenanordnung relativ zur Filterfläche auf einer vorgegebenen Bewegungsbahn hin und her bewegt wird, wobei mit Hilfe wenigstens einer Spritzdüse einer Spritzdüsenanordnung eine Reinigungsflüssigkeit auf die Filterfläche gespritzt wird, um auf der Filterfläche vorhandene Rückstände von der Filterfläche zu entfernen.

Gattungsgemäße Vorrichtungen sind im Stand der Technik hinlänglich bekannt und dienen dem Abscheiden von festen Verunreinigungen aus Flüssigkeiten. Insbesondere kommen entsprechende Vorrichtungen bei der Reinigung von kommunalem oder industriellem Abwasser zum Einsatz, bei der Verunreinigungen (z.B. in Form von Steinen oder faserigem Material) von einer Wasserfraktion abgetrennt werden sollen, wobei die Abscheidungsleistung unter anderem von der Größe der Durchbrechungen der Filterfläche der Filtertrommel abhängt.

In jedem Fall kommt es während der Filtration, d.h. während dem Abtrennen der Verunreinigungen, immer wieder zu einem Verstopfen einzelner Durchbrechungen der Filterfläche, so dass diese von Zeit zu Zeit oder auch kontinuierlich gereinigt werden muss. Dies geschieht beispielsweise durch Aufspritzen einer Reinigungsflüssigkeit (bei der es sich im Rahmen der Erfindung z.B. um Wasser bzw. um Filtrat der Filtertrommel handeln kann). Bekannt ist in diesem Zusammenhang zudem, die Reinigungsflüssigkeit mit Hilfe von einer oder mehreren Spritzdüsen auf die Filterfläche aufzuspritzen, wobei die Spritzdüsen hierbei entlang einer Bewegungsbahn hin und her bewegt werden, um alle Bereich der Filterfläche mit Reinigungsflüssigkeit bespritzen zu können. Eine entsprechende Filtervorrichtung ist beispielsweise in der GB 2 504 120 A offenbart.

Auch wenn diese Art der Reinigung bereits befriedigende Reinigungsergebnisse liefert, besteht auch weiterhin Bedarf, die Reinigungsleistung und damit auch die Filterleistung der zum Einsatz kommenden Vorrichtung zu verbessern.

Aufgabe der vorliegenden Erfindung ist es daher, eine Reinigung für entsprechende Vorrichtungen vorzuschlagen, die sich diesbezüglich positiv vom bekannten Stand der Technik unterscheidet.

Die Aufgabe wird gelöst durch eine Vorrichtung und ein Verfahren mit den Merkmalen der unabhängigen Patentansprüche.

Die Vorrichtung besitzt prinzipiell eine drehbar gelagerte Filtertrommel mit einer vorzugsweise zylindrisch ausgebildeten Filterfläche sowie einen mit der Filtertrommel in Wirkverbindung stehenden Trommelantrieb zum Drehen der Filtertrommel um eine beispielsweise horizontal oder schräg ausgerichtete Drehachse (im Übrigen ist im Sinne der Erfindung unter dem Begriff "Filtern" ganz allgemein die Abtrennung von festen Bestandteilen aus einer Flüssigkeit zu verstehen).

Ferner ist der Filterfläche, die beispielsweise als Maschengewebe oder als perforierte bzw. mit Durchbrechungen versehene (Zylinder-)Fläche vorliegen kann, ein Reinigungssystem zum Reinigen der Filterfläche zugeordnet, wobei das Reinigungssystem eine, vorzugsweise als Linearführung ausgebildete, Führung sowie eine entlang der Führung mit Hilfe eines Antriebs hin und her bewegbare Spritzdüsenanordnung aufweist, über das eine Reinigungsflüssigkeit auf die Filterfläche aufspritzbar ist. Die Spritzdüsenanordnung umfasst hierfür wenigstens einen entlang der Führung hin und her bewegbaren Träger (z.B. in Form eines Schlittens) sowie wenigstens eine an dem Träger gelagerte Spritzdüse, wobei die Spritzdüse mit einem Leitungssystem in Verbindung steht, über die der Spritzdüse eine Reinigungsflüssigkeit (z.B. Wasser) zuführbar ist.

Erfindungsgemäß wird nun vorgeschlagen, dass die Spritzdüse derart am Träger gelagert ist, dass sie um eine Achse bewegbar ist, wobei die Lagerung derart ausgebildet ist, dass die Spritzdüse in eine Rotation versetzbar ist (bei der Achse handelt es sich im Rahmen der Erfindung also um eine Rotationsachse). Die Spritzdüse wird also während der Reinigung der Filterfläche nicht nur entlang der durch die Führung vorgegebenen Bewegungsbahn, die vorzugsweise parallel zur Drehachse der Filtertrommel verläuft, hin und her bewegt. Vielmehr wird diese Bewegung durch die (Rotations-)Bewegung der Spritzdüse um eine von der Spritzdüse beabstandete Achse überlagert, wobei die Achse vorzugsweise senkrecht zur Drehachse der Filtertrommel verläuft und sich mit dieser scheiden kann. Während also der Träger einmal zwischen den die Führung beidseitig begrenzenden Endpunkten hin und her bewegt wird, bewegt sich die Spritzdüse bezogen auf die Achse mehrmals im Kreis, so dass sich die Spritzdüse im Ergebnis während der Reinigung auf einer zykloidenförmigen Bahn bewegen kann.

Vorteile bringt es zudem mit sich, wenn die Spritzdüsenanordnung zumindest zwei an Spritzdüsenarmen angeordnete Spritzdüsen umfasst, wobei die Spritzdüsenarme bezüglich der Achse in unterschiedliche Richtungen ausgerichtet sind. Beispielsweise wäre es denkbar, dass die Spritzdüsenanordnung zwei Spritzdüsenarme aufweist, die bezogen auf die Achse in entgegengesetzte Richtungen ragen, wobei der Abstand der einzelnen Spritzdüsen von der Achse für alle Spritzdüsen gleich groß oder auch unterschiedlich groß ausgebildet sein kann. Die Spritzdüsenarme können gleichzeitig als Teil des Leitungssystems dienen, über die den Spritzdüsen die Reinigungsflüssigkeit zugeführt wird.

Im Übrigen sei an dieser Stelle darauf hingewiesen, dass sich die Spritzdüsenanordnung sowie die Führung vorzugsweise außerhalb der Filtertrommel befinden, so dass die Reinigungsflüssigkeit während der Reinigung von außen auf die Filterfläche aufgespritzt wird (die zu reinigende Flüssigkeit wird in diesem Fall dem Inneren der Filtertrommel zugeführt, so dass Verunreinigungen auf der Innenseite der Filterfläche zurückgehalten werden und während der Reinigung im Gegenstrom, d.h. entgegen der Filtrationsrichtung, von der Filterfläche gelöst werden und innerhalb der Filtertrommel von einer eventuell vorhandenen Auffangvorrichtung, beispielsweise einer parallel zur Drehachse verlaufenden Auffangwanne, aufgefangen und aus der Filtertrommel abgeführt werden können.

Ferner sei an dieser Stelle generell für die vorliegende Erfindung, d.h. auch für das nachfolgend beschriebene Verfahren, angemerkt, dass sich Filtrationsvorgänge, bei denen Verunreinigungen mit Hilfe der Filterfläche aus der Flüssigkeit abgetrennt werden, mit Reinigungsvorgängen, während denen die Filterfläche mit Reinigungsflüssigkeit bespritz wird, abwechseln können. Ebenso ist es selbstverständlich auch denkbar, dass das Reinigungssystem während des Filtrationsvorgangs aktiv ist, so dass die Filterfläche während der Entfernung von Verunreinigungen aus der Flüssigkeit gleichzeitig auch kontinuierlich gereinigt wird.

Vorteilhaft ist es zudem, wenn die Spritzdüsen (bzw. zumindest ein Teil derselben) konzentrisch um die Achse angeordnet sind. Hierdurch wird eine Unwucht während der Rotation der Spritzdüsen vermieden. Insbesondere sollte der Träger zudem ein Lager für ein die Achse definierendes Achselement aufweisen, das sich in Richtung der Drehachse der Filtertrommel erstreckt und an dem wiederum Spritzdüsenarme angeordnet sind, die schließlich die Spritzdüsen tragen bzw. diese an ihren Endbereichen umfassen.

Vorteile bringt es zudem mit sich, wenn die Spritzdüse(n) derart bezüglich der Achse ausgerichtet ist beziehungsweise sind, dass die die Spritzdüse(n) beim Betrieb der Spritzdüsenanordnung verlassende Reinigungsflüssigkeit durch Rückstoß eine Rotation der Spritdüse(n) um die Achse bewirkt. Die Spritzdüsen bewegen sich in diesem Fall bei der Zufuhr von Reinigungsflüssigkeit automatisch um die Achse, ohne dass hierfür eine zusätzliche Antriebseinheit notwendig wäre. Hierfür sind die Spritzdüsen vorzugsweise derart ausgerichtet, dass die austretende Reinigungsflüssigkeit die Spritzdüsen zumindest teilweise in einer Richtung verlässt, die windschief zur Achse verläuft. Ferner sollten alle Spritzdüsen derart ausgerichtet sein, dass der Rückstoß der jeweils austretenden Reinigungsflüssigkeit eine Rotation der Spritzdüsen in dieselbe Rotationsrichtung bewirkt.

Ebenso ist es vorteilhaft, wenn der Trommelantrieb und der Antrieb der Spritzdüsenanordnung aufeinander abgestimmt sind, wobei bei einer Änderung der Drehzahl der Filtertrommel auch eine Änderung der Bewegungsgeschwindigkeit der Spritzdüsenanordnung erfolgt und/oder umgekehrt. Während der Trommelantrieb und der Antrieb der Spritzdüsenanordnung prinzipiell durch eine einzige Antriebseinheit gebildet sein können, die sowohl mit dem Träger der Spritzdüsenanordnung als auch mit der Filtertrommel, beispielsweise über entsprechende Getriebe, in Wirkverbindung steht, ist es von Vorteil, wenn es sich bei den genannten Antrieben um separate Einheiten handelt. Wird nun die Drehzahl der Filtertrommel durch entsprechende Steuerungsbefehle erhöht (z.B. weil die Filtrationsleistung der Filtertrommel angepasst werden soll), so sollte die Steuerung der Vorrichtung ausgebildet sein, auch die Bewegungsgeschwindigkeit der Spritzdüsenanordnung, sprich des Trägers und der daran angeordneten Spritzdüse(n), zu erhöhen, um eine zuverlässige Reinigung der gesamten Filterfläche sicherzustellen.

Ebenso bringt es Vorteile mit sich, wenn der Antrieb der Spritzdüsenanordnung ausgebildet ist, den Träger während des Betriebs des Reinigungssystems zumindest abschnittsweise mit einer Geschwindigkeit von maximal 10 m/s, bevorzugt mit einer Geschwindigkeit von maximal 7 m/s, entlang der Führung zu bewegen. Die Beschleunigung und das Abbremsen der Spritzdüsenanordnung bzw. des Trägers in den Endbereichen der Führung sollten hierbei möglichst abrupt erfolgen, um über die gesamte Breite der Filtertrommel (d.h. deren räumliche Erstreckung in Richtung ihrer Drehachse) ein möglichst einheitliches Spritzmuster der auf die Filterfläche aufgespritzten Reinigungsflüssigkeit zu gewährleisten.

Auch ist es von Vorteil, wenn die Spritzdüse eine Austrittsöffnung für den Austritt der Reinigungsflüssigkeit aufweist, wobei der kleinste Abstand zwischen der Austrittsöffnung und der Filterfläche einen Betrag zwischen 1 cm und 20 cm, vorzugsweise zwischen 5 cm und 15 cm, aufweist. Liegt der Abstand in dem genannten Bereich, so kann eine zuverlässige Reinigung der Filterfläche sichergestellt werden, ohne dass die Gefahr besteht, die Filterfläche bei entsprechend hohem Druck der auftreffenden Reinigungsflüssigkeit zu beschädigen.

Besonders vorteilhaft ist es, wenn der kleinste Abstand zwischen der Austrittsöffnung und der Achse der Spritzdüse einen Betrag zwischen 5 cm und 30 cm, vorzugsweise zwischen 10 cm und 25 cm, aufweist. Die Austrittsöffnung(en) der Spritzdüse(n) bewegt bzw. bewegen sich in diesem Fall bezogen auf die Achse auf einem Kreis mit einem Durchmesser zwischen 10 cm und 60 cm. In diesem Zusammenhang sei allgemein darauf hingewiesen, dass die Spritzdüsen derart ausgebildet sein sollten, dass die Reinigungsflüssigkeit fächerförmig aus den Austrittsöffnungen austritt.

Ferner betrifft die Erfindung ein Verfahren zum Reinigen der Filterfläche einer drehbar gelagerten Filtertrommel, die der Entfernung von Verunreinigungen aus einer Flüssigkeit, vorzugsweise aus Abwasser, dient, wobei die Filtertrommel sowie das zum Einsatz kommende Reinigungssystem die bisher oder im folgenden beschriebenen Merkmale (einzeln oder in beliebiger Kombination) aufweisen können.

In jedem Fall wird die Filtertrommel zumindest während der Reinigung mit Hilfe eines Trommelantriebs um eine Drehachse gedreht. Zudem wird eine Spritzdüsenanordnung relativ zur Filterfläche auf einer vorgegebenen und vorzugsweise linear verlaufenden und parallel zur Drehachse der Filtertrommel ausgerichteten Bewegungsbahn hin und her bewegt. Die Spritzdüsenanordnung umfasst wiederum wenigstens eine Spritzdüse, über die während der Reinigung eine Reinigungsflüssigkeit (z.B. Wasser) auf die Filterfläche gespritzt wird, um auf der Filterfläche vorhandene Rückstände von der Filterfläche zu entfernen.

Erfindungsgemäß wird nun vorgeschlagen, dass die Spritzdüse während der Reinigung zumindest zeitweise um eine von der Austrittsöffnung der Spritzdüse beabstandete Achse bewegt wird, vorzugsweise rotiert, während sie entlang der genannten Bewegungsbahn hin und her bewegt wird. Rotiert die Spritzdüse um die Achse, so beschreibt sie vorzugsweise eine zykloidenförmige Bewegungsbahn, so dass die Filterfläche besonders gründlich gereinigt wird.

Vorteile bringt es mit sich, wenn die Reinigungsflüssigkeit derart aus der Spritzdüse austritt, dass sie durch Rückstoß ein Bewegen, vorzugsweise ein Rotieren, der Spritzdüse um die Achse bewirkt. In diesem Fall ist kein separater Antrieb zum Bewegen der Spritzdüse(n) um die Achse notwendig.

Besonders vorteilhaft ist es, wenn die Spritzdüse um die Achse mit einer Drehzahl rotiert, deren Betrag zwischen 0,1 Umdrehungen pro Sekunde und 100 Umdrehungen pro Sekunde, vorzugweise zwischen einer Umdrehung pro Sekunde und 30 Umdrehungen pro Sekunde, liegt. Die Drehzahl kann beispielsweise durch Änderung des Drucks der die Spritzdüse(n) verlassenden Reinigungsflüssigkeit variiert werden.

Ebenso ist es vorteilhaft, wenn die Filtertrommel während der Reinigung mit einer Drehzahl angetrieben wird, deren Betrag zwischen 0,1 Umdrehungen pro Minute und 10 Umdrehungen pro Minute, vorzugweise zwischen einer Umdrehung pro Minute und 8 Umdrehungen pro Minute, liegt. Im Übrigen kann die Reinigung während der Filtration von Flüssigkeit durchgeführt werden, wobei auch eine kontinuierliche Reinigung bei gleichzeitiger Filtration möglich ist, so dass die zu filtrierende Flüssigkeit immer wieder mit einer gereinigten Filterfläche in Kontakt kommt. Ebenso bringt es Vorteile mit sich, wenn die Spritzdüsenanordnung während der Reinigung zumindest abschnittsweise mit einer Geschwindigkeit von maximal 10 m/s, bevorzugt mit einer Geschwindigkeit von maximal 7 m/s, entlang der Bewegungsbahn bewegt wird.

Vorteilhaft ist es zudem, wenn bei einer Änderung der Drehzahl der Filtertrommel auch eine Änderung der Bewegungsgeschwindigkeit der Spritzdüsenanordnung erfolgt und/oder umgekehrt. Insbesondere sollte die Bewegungsgeschwindigkeit der Spritzdüsenanordnung erhöht (bzw. verringert) werden, wenn die Drehzahl der Filtertrommel erhöht (bzw. verringert) wird, wobei die Bewegungsgeschwindigkeit proportional zur Drehzahl geändert werden kann.

Insbesondere ist es äußert vorteilhaft, wenn die Bewegungsgeschwindigkeit der Spritzdüsenanordnung und die Drehzahl der Filtertrommel derart aufeinander abgestimmt sind, dass die gesamte Filterfläche nach maximal 20 Umdrehung der Filtertrommel, vorzugsweise nach maximal drei Umdrehung der Filtertrommel, wenigstens einmal mit der Reinigungsflüssigkeit bespritzt wurde. Hierdurch wird sichergestellt, dass die Filterfläche zumindest großteils gereinigt ist, wenn sie wieder mit der zu filternden Flüssigkeit in Kontakt kommt (die Filtertrommel ist in der Regel nur bis zu einer gewissen Höhe von der Flüssigkeit umgeben, wobei das Reinigungssystem in dem Bereich angeordnet ist, in dem sich keine Flüssigkeit befindet).

Schließlich ist es vorteilhaft, wenn die Reinigungsflüssigkeit unmittelbar vor dem Austritt aus der Spritzdüse mit einem Druck beaufschlagt wird, der einen Betrag zwischen 3 bar und 200 bar, vorzugsweise zwischen 100 bar und 200 bar, aufweist. Dies stellt eine zuverlässige Reinigung der Filterfläche, d.h. ein zuverlässiges Ablösen der von der Filterfläche zurückgehaltenen Verunreinigungen, sicher, wobei die Reinigungsflüssigkeit vorzugsweise auf die den zurückgehaltenen Verunreinigungen abgewandte Seite der Filterfläche gespritzt werden sollte.

Weitere Vorteile der Erfindung sind in den nachfolgenden Ausführungsbeispielen beschrieben. Es zeigen, jeweils schematisch:
- **Figur 1**: ausgewählte Bestandteile einer erfindungsgemäßen Vorrichtung zur Entfernung von Verunreinigungen aus einer Flüssigkeit, und
- **Figur 2**: Details des in Figur 1 gezeigten Reinigungssystems.

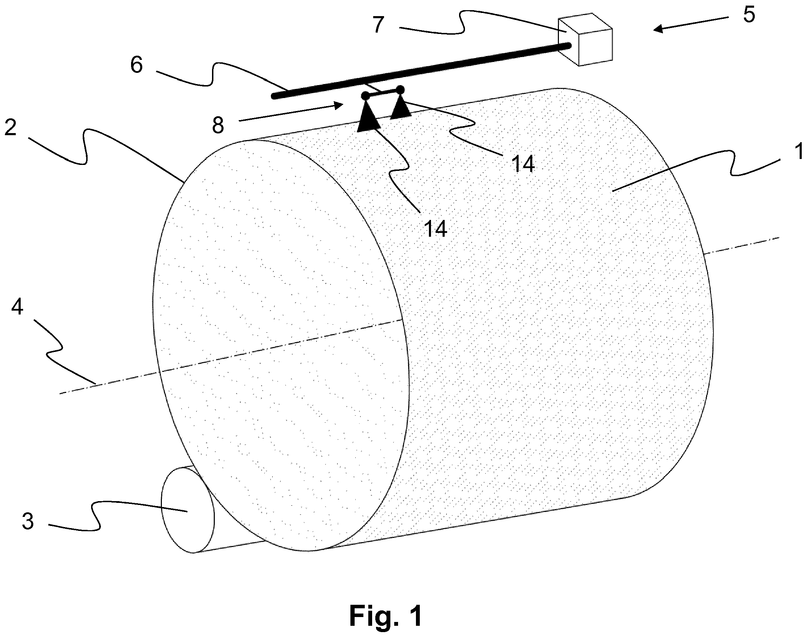

Figur 1 zeigt schematisch eine erfindungsgemäße Vorrichtung zur Entfernung von Verunreinigungen aus einer Flüssigkeit. Die Vorrichtung umfasst eine auf nicht gezeigte Weise um eine Drehachse 4 drehbar gelagerte Filtertrommel 2 mit einer zylindrisch ausgebildeten Filterfläche 1 (die beispielsweise durch ein Maschengewebe oder eine mit Durchbrechungen versehene Metallfläche gebildet sein kann). Die Filtertrommel 2 kann an ihren Stirnseiten bis auf einen Zulauf für die Flüssigkeit und eine Abfuhröffnung für die abgeschiedenen Verunreinigungen geschlossen sein. Ebenso kann die Filtertrommel 2 teilweise in die zu behandelnde Flüssigkeit eingetaucht sein und/oder über eine im Inneren der Filtertrommel 2 verlaufenden (nicht gezeigten) Auffangwanne verfügen, in die während der Drehung der Filtertrommel 2 (die von einem entsprechenden Trommelantrieb 3 bewirkt wird) nach oben gelangende Verunreinigungen fallen.

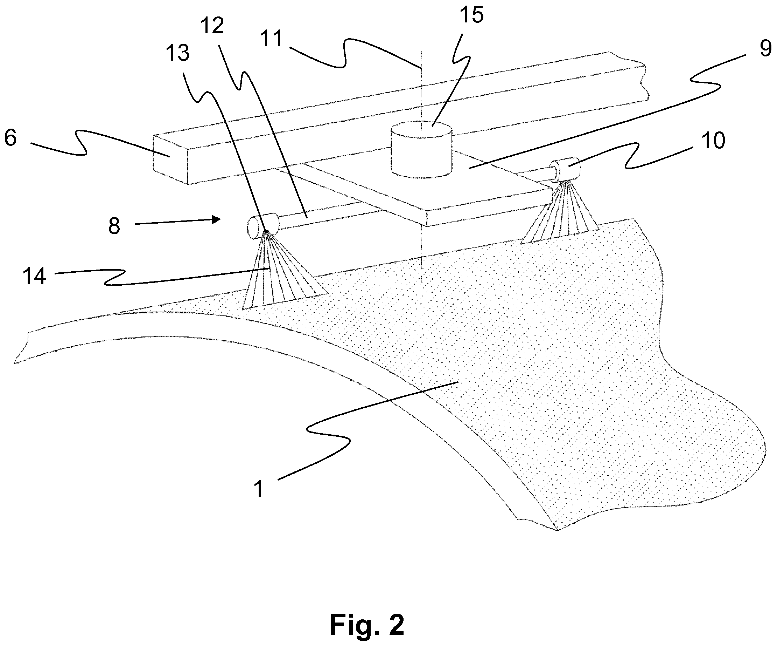

Unabhängig von der genauen Ausgestaltung der Vorrichtung ist ein Reinigungssystem 5 zum Reinigen der Filterfläche 1 vorgesehen, dessen wesentliche Bestandteile in den Figuren 1 und 2 (Ausschnitt von Figur 1) gezeigt sind.

Prinzipiell umfasst das Reinigungssystem 5 eine Führung 6, an der eine Spritzdüsenanordnung 8 angeordnet ist, die mit Hilfe eines Antriebs 7 entlang der Führung 6 hin und her bewegt werden kann (wobei die Führung 6 vorzugsweise parallel zur Drehachse 4 der Filtertrommel 2 verläuft). Die Spritzdüsenanordnung 8 umfasst wiederum einen an der Führung 6 gelagerten Träger 9, an dem im gezeigten Ausführungsbeispiel zwei Spritzdüsen 10 über ein Lager 15 gelagert sind, wobei das Lager 15 eine Rotation der Spritzdüsen 10 um eine Achse 11 ermöglicht (die Spritzdüsen 10 bzw. deren Austrittsöffnungen 13 sind jeweils über einen Spritzdüsenarm 12 von der Achse 11 beabstandet).

Wird den Spritzdüsen 10 nun eine Reinigungsflüssigkeit 14 mit hohem Druck (Werte siehe oben) zugeführt, so verlässt dies die Austrittsöffnungen 13 vorzugsweise fächerförmig, wie besonders gut aus Figur 2 ersichtlich. Sind die Austrittsöffnungen 13 schließlich so ausgerichtet, dass die Reinigungsflüssigkeit 14 die Spritzdüsen 10 stets in derselben Drehrichtung verlässt, so rotieren die Spritzdüsen 10 während der Reinigung automatisch um die Achse 11. Im Fall der in Figur 2 gezeigten Ausrichtung würden die Spritzdüsen 10 bei einer Draufsicht auf die Achse 11 im Uhrzeigersinn rotieren.

Ferner werden die Spritzdüsen 10 durch die Bewegung des Trägers 9 entlang der Führung 6 über die gesamte Breite (d.h. die räumliche Ausdehnung in Richtung der Drehachse 4) der Filtertrommel 2 bewegt. Da sich die Filtertrommel 2 zudem zumindest während der Reinigung um ihre Drehachse 4 dreht, wird im Ergebnis die gesamte Filterfläche 1 im Verlauf einer bestimmten Reinigungszeit von der Reinigungsflüssigkeit 14 bespritzt und damit von zurückgehaltenen Verunreinigungen befreit.

Die vorliegende Erfindung ist nicht auf die dargestellten und beschriebenen Ausführungsbeispiele beschränkt. Abwandlungen im Rahmen der Patentansprüche sind ebenso möglich.

### Bezugszeichenliste

- 1: Filterfläche
- 2: Filtertrommel
- 3: Trommelantrieb
- 4: Drehachse der Filtertrommel
- 5: Reinigungssystem
- 6: Führung
- 7: Antrieb der Spritzdüsenanordnung
- 8: Spritzdüsenanordnung
- 9: Träger
- 10: Spritzdüse
- 11: Achse der Spritzdüse
- 12: Spritzdüsenarm
- 13: Austrittsöffnung der Spritzdüse
- 14: Reinigungsflüssigkeit
- 15: Lager

## Patentansprüche

1. Vorrichtung zur Entfernung von Verunreinigungen aus einer Flüssigkeit, vorzugsweise aus Abwasser,
- mit einer drehbar gelagerten und eine Filterfläche (1) aufweisenden Filtertrommel (2),
- mit einem mit der Filtertrommel (2) in Wirkverbindung stehenden Trommelantrieb (3) zum Drehen der Filtertrommel (2) um eine Drehachse (4), und
- mit einem Reinigungssystem (5) zum Reinigen der Filterfläche (1),
- wobei das Reinigungssystem (5) eine, vorzugsweise als Linearführung ausgebildete, Führung (6) sowie eine entlang der Führung (6) mit Hilfe eines Antriebs (7) hin und her bewegbare Spritzdüsenanordnung (8) aufweist, über das eine Reinigungsflüssigkeit (14) auf die Filterfläche (1) aufspritzbar ist,
**dadurch gekennzeichnet, dass**
die Spritzdüsenanordnung (8) wenigstens einen entlang der Führung (6) hin und her bewegbaren Träger (9) sowie wenigstens eine an dem Träger (9) gelagerte Spritzdüse (10) umfasst, wobei die Spritzdüse (10) derart am Träger (9) gelagert ist, dass sie um eine Achse (11) bewegbar und bezogen auf die Achse (11) mehrmals im Kreis drehbar ist, während sich der Träger (9) einmal zwischen die Führung (6) beidseitig begrenzenden Endpunkten hin und her bewegt.

2. Vorrichtung gemäß dem vorangegangenen Anspruch, **dadurch gekennzeichnet, dass** die Spritzdüsenanordnung (8) zumindest zwei an Spritzdüsenarmen (12) angeordnete Spritzdüsen (10) umfasst, wobei die Spritzdüsenarme (12) bezüglich der Achse (11) in unterschiedliche Richtungen ausgerichtet sind.

3. Vorrichtung gemäß dem vorangegangenen Anspruch, **dadurch gekennzeichnet, dass** die Spritzdüsen (10) konzentrisch um die Achse (11) angeordnet sind.

4. Vorrichtung gemäß einem der vorangegangenen Ansprüche, **dadurch gekennzeichnet, dass** die Spritzdüse(n) (10) derart bezüglich der Achse (11) ausgerichtet ist bzw. sind, dass die die Spritzdüse(n) (10) beim Betrieb der Spritzdüsenanordnung (8) verlassende Reinigungsflüssigkeit (14) durch Rückstoß eine Rotation der Spritdüse(n) um die Achse (11) bewirkt, so dass die Spritzdüsen (10) ohne zusätzliche Antriebseinheit in eine Rotation versetzt werden.

5. Vorrichtung gemäß einem der vorangegangenen Ansprüche, **dadurch gekennzeichnet, dass** der Trommelantrieb (3) und der Antrieb (7) der Spritzdüsenanordnung (8) aufeinander abgestimmt sind, wobei bei einer Änderung der Drehzahl der Filtertrommel (2) auch eine Änderung der Bewegungsgeschwindigkeit der Spritzdüsenanordnung (8) erfolgt und/oder umgekehrt.

6. Vorrichtung gemäß einem der vorangegangenen Ansprüche, **dadurch gekennzeichnet, dass** der Antrieb (7) der Spritzdüsenanordnung (8) ausgebildet ist, den Träger (9) während des Betriebs des Reinigungssystems (5) zumindest abschnittsweise mit einer Geschwindigkeit von maximal 10 m/s, bevorzugt mit einer Geschwindigkeit von maximal 7 m/s, entlang der Führung (6) zu bewegen.

7. Vorrichtung gemäß einem der vorangegangenen Ansprüche, **dadurch gekennzeichnet, dass** die Spritzdüse (10) eine Austrittsöffnung (13) für den Austritt der Reinigungsflüssigkeit (14) aufweist, wobei der kleinste Abstand zwischen der Austrittsöffnung (13) und der Filterfläche (1) einen Betrag zwischen 1 cm und 20 cm, vorzugsweise zwischen 5 cm und 15 cm, aufweist.

8. Vorrichtung gemäß einem der vorangegangenen Ansprüche, **dadurch gekennzeichnet, dass** der kleinste Abstand zwischen der Austrittsöffnung (13) der Spritzdüse (10) und der Achse (11) der Spritzdüse (10) einen Betrag zwischen 5 cm und 30 cm, vorzugsweise zwischen 10 cm und 25 cm, aufweist.

9. Verfahren zum Reinigen der Filterfläche (1) einer drehbar gelagerten Filtertrommel (2), die der Entfernung von Verunreinigungen aus einer Flüssigkeit, vorzugsweise aus Abwasser, dient,
- wobei die Filtertrommel (2) mit Hilfe eines Trommelantriebs (3) um eine Drehachse (4) gedreht wird,
- wobei eine Spritzdüsenanordnung (8) relativ zur Filterfläche (1) auf einer vorgegebenen Bewegungsbahn hin und her bewegt wird, und
- wobei mit Hilfe wenigstens einer Spritzdüse (10) einer Spritzdüsenanordnung (8) eine Reinigungsflüssigkeit (14) auf die Filterfläche (1) gespritzt wird, um auf der Filterfläche (1) vorhandene Rückstände von der Filterfläche (1) zu entfernen,
**dadurch gekennzeichnet, dass**
die Spritzdüse (10) zumindest zeitweise um eine Achse (11) bewegt wird, während sie entlang der genannten Bewegungsbahn hin und her bewegt wird und sich bezogen auf die Achse (11) mehrmals im Kreis dreht, während der Träger (9) einmal zwischen die Führung (6) beidseitig begrenzenden Endpunkten hin und her bewegt wird.

10. Verfahren gemäß dem vorangegangenen Anspruch, **dadurch gekennzeichnet, dass** die Reinigungsflüssigkeit (14) derart aus der Spritzdüse (10) austritt, dass sie durch Rückstoß eine Bewegung, vorzugsweise ein Rotieren, der Spritzdüse (10) um die Achse (11) bewirkt.

11. Verfahren gemäß Anspruch 9 oder 10, **dadurch gekennzeichnet, dass** die Spritzdüse (10) um die Achse (11) mit einer Drehzahl rotiert, deren Betrag zwischen 0,1 Umdrehungen pro Sekunde und 100 Umdrehungen pro Sekunde, vorzugweise zwischen einer Umdrehung pro Sekunde und 30 Umdrehungen pro Sekunde, liegt.

12. Verfahren gemäß einem der Ansprüche 9 bis 11, **dadurch gekennzeichnet, dass** die Filtertrommel (2) während der Reinigung mit einer Drehzahl angetrieben wird, deren Betrag zwischen 0,1 Umdrehungen pro Minute und 10 Umdrehungen pro Minute, vorzugweise zwischen einer Umdrehung pro Minute und 8 Umdrehungen pro Minute, liegt.

13. Verfahren gemäß einem der Ansprüche 9 bis 12, **dadurch gekennzeichnet, dass** die Spritzdüsenanordnung (8) während der Reinigung zumindest abschnittsweise mit einer Geschwindigkeit von maximal 10 m/s, bevorzugt mit einer Geschwindigkeit von maximal 7 m/s, entlang der Bewegungsbahn bewegt wird.

14. Verfahren gemäß einem der Ansprüche 9 bis 13, **dadurch gekennzeichnet, dass** bei einer Änderung der Drehzahl der Filtertrommel (2) auch eine Änderung der Bewegungsgeschwindigkeit der Spritzdüsenanordnung (8) erfolgt und/oder umgekehrt.

15. Verfahren gemäß einem der Ansprüche 9 bis 14, **dadurch gekennzeichnet, dass** die Bewegungsgeschwindigkeit der Spritzdüsenanordnung (8) und die Drehzahl der Filtertrommel (2) derart aufeinander abgestimmt sind, dass die gesamte Filterfläche (1) nach maximal 20 Umdrehung der Filtertrommel (2), vorzugsweise nach maximal drei Umdrehung der Filtertrommel (2), wenigstens einmal mit der Reinigungsflüssigkeit (14) bespritzt wurde.

16. Verfahren gemäß einem der Ansprüche 9 bis 15, **dadurch gekennzeichnet, dass** die Reinigungsflüssigkeit (14) unmittelbar vor dem Austritt aus der Spritzdüse (10) mit einem Druck beaufschlagt wird, der einen Betrag zwischen 3 bar und 200 bar, vorzugsweise zwischen 100 bar und 200 bar, aufweist.

## Claims

1. Device to remove impurities from a liquid, preferably from sewage,
- with a pivoted filtering drum (2) having a filtering surface (1),
- with a drum drive (3) operatively connected to the filtering drum (2) to turn the filtering drum (2) around a rotating axis (4), and
- with a cleaning system (5) to clean the filtering surface (1),
- wherein the cleaning system (5) has a guide (6) preferably executed as a linear guide and a spray nozzle arrangement (8) movable back and forth along the guide (6) with the help of a drive (7), through which a cleaning liquid (14) can be sprayed on the filtering surface (1),
**characterized in that**
the spray nozzle arrangement (8) comprises at least one carrier (9) movable back and forth along the guide (6) and at least one spray nozzle (10) mounted on the carrier (9), wherein the spray nozzle (10) is mounted on the carrier (9) in such a way that it can be moved around an axis (11) and is rotatable multiple times in a circle in relation to the axis (11), while the carrier (9) moves back and forth once between the end points limiting the guide (6) on both sides.

2. Device according to the preceding claim, **characterized in that** the spray nozzle arrangement (8) comprises at least two spray nozzles (10) arranged on spray nozzle arms (12), wherein the spray nozzle arms (12) are aligned in different directions with regard to the axis (11).

3. Device according to the preceding claim, **characterized in that** the spray nozzles (10) are arranged concentrically around the axis (11).

4. Device according to one of the preceding claims, **characterized in that** the spray nozzle(s) (10) is/are aligned in such a way with regard to the axis (11) that the cleaning liquid (14) that flows out of the spray nozzle(s) (10) when the spray nozzle arrangement (8) is operating makes the spray nozzle(s) rotate around the axis (11) owing to recoil, so that the spray nozzles (10) are made to rotate without an additional drive unit.

5. Device according to one of the preceding claims, **characterized in that** the drum drive (3) and the drive (7) of the spray nozzle arrangement (8) are coordinated, wherein when the rotational speed of the filtering drum (2) changes, this also changes the speed of the movement of the spray nozzle arrangement (8) and/or vice versa.

6. Device according to one of the preceding claims, **characterized in that** the drive (7) of the spray nozzle arrangement (8) has been designed to move the carrier (9) along the guide (6), at least in sections, while the cleaning system (5) is operating, with a maximum speed of 10 m/s, preferably with a maximum speed of 7 m/s.

7. Device according to one of the preceding claims, **characterized in that** the spay nozzle (10) has a discharge opening (13) for the cleaning liquid (14) to flow out, wherein the shortest distance between the discharge opening (13) and the filtering surface (1) is between 1 cm and 20 cm, preferably between 5 cm and 15 cm.

8. Device according to one of the preceding claims, **characterized in that** the shortest distance between the discharge opening (13) of the spray nozzle (10) and the axis (11) of the spray nozzle (10) is between 5 cm and 30 cm, preferably between 10 cm and 25 cm.

9. Method to clean the filtering surface (1) of a pivoted filtering drum (2) that serves to remove impurities from a liquid, preferably from sewage,
- wherein the filtering drum (2) is turned around a rotating axis (4) with the help of a drum drive (3),
- wherein a spray nozzle arrangement (8) is moved back and forth on a predetermined trajectory relative to the filtering surface (1), and
- wherein with the help of at least one spray nozzle (10) of a spray nozzle arrangement (8), a cleaning liquid (14) is sprayed on the filtering surface (1) in order to remove the residues on the filtering surface (1) from the filtering surface (1),
**characterized in that**
the spray nozzle (10) is moved at least at times around an axis (11), while it is moved back and forth along the above-mentioned trajectory and is rotating multiple times in a circle in relation to the axis (11), while the carrier (9) moves back and forth once between the end points limiting the guide (6) on both sides.

10. Method according to the preceding claim, **characterized in that** the cleaning liquid (14) flows out of the spray nozzle (10) in such a way that it causes a movement, preferably a rotation of the spray nozzle (10) around the axis (11), by recoil.

11. Method according to claim 9 or 10, **characterized in that** the spray nozzle (10) rotates around the axis (11) with a rotational speed of a magnitude between 0.1 revolutions per second and 100 revolutions per second, preferably between one revolution per second and 30 revolutions per second.

12. Method according to one of the claims 9 to 11, **characterized in that** while the filtering drum (2) is being moved with a rotational speed during the cleaning process, it does so with a magnitude between 0.1 revolutions per minute and 10 revolutions per minute, preferably between one revolution per minute and 8 revolutions per minute.

13. Method according to one of the claims 9 to 12, **characterized in that** during the cleaning process, the spray nozzle arrangement (8) is moved at least in sections with a maximum speed of 10 m/s, preferably with a maximum speed of 7 m/s along the trajectory.

14. Method according to one of the claims 9 to 13, **characterized in that** when the rotational speed of the filtering drum (2) is changed, this also changes the speed of the movement of the spray nozzle arrangement (8) and/or vice versa.

15. Method according to one of the claims 9 to 14, **characterized in that** the speed of the movement of the spray nozzle arrangement (8) and the rotational speed of the filtering drum (2) are coordinated in such a way that the entire filtering surface (1) was sprayed at least once with the cleaning liquid (14) after no more than 20 revolutions of the filtering drum (2), preferably after no more than three revolutions of the filtering drum (2).

16. Method according to one of the claims 9 to 15, **characterized in that** the cleaning liquid (14) is impinged on, right before it flows out of the spray nozzle (10), with a pressure having a magnitude between 3 bar and 200 bar, preferably between 100 bar and 200 bar.

## Revendications

1. Dispositif pour éliminer des impuretés d'un liquide, de préférence d'une eau résiduaire,
- avec un tambour filtrant (2) monté de manière rotative et présentant une surface filtrante (1),
- avec un entraînement (3) de tambour en liaison fonctionnelle avec le tambour filtrant (2) pour faire tourner le tambour filtrant (2) autour d'un axe de rotation (4), et
- avec un système de nettoyage (5) pour nettoyer la surface filtrante (1),
- dans lequel le système de nettoyage (5) comporte un guidage (6), de préférence réalisé sous la forme d'un guidage linéaire, ainsi qu'un agencement de buses de pulvérisation (8) pouvant être déplacé en va-et-vient le long du guidage (6) à l'aide d'un entraînement (7), par lequel un liquide de nettoyage (14) peut être pulvérisé sur la surface filtrante (1),
**caractérisé en ce que**
l'agencement de buses de pulvérisation (8) comporte au moins un support (9) qui peut être déplacé en va-et-vient le long du guide (6) ainsi qu'au moins une buse de pulvérisation (10) montée sur le support (9), sachant que la buse de pulvérisation (10) est montée sur le support (9) de manière à pouvoir être déplacée autour d'un axe (11) et à pouvoir être tournée en cercle plusieurs fois par rapport à l'axe (11), tandis que le support (9) se déplace une fois en va-et-vient entre des points d'extrémité délimitant le guide (6) des deux côtés.

2. Dispositif selon la revendication précédente, **caractérisé en ce que** l'agencement de buses de pulvérisation (8) comprend au moins deux buses de pulvérisation (10) disposées sur des bras (12) de buses de pulvérisation, dans lequel les bras (12) de buses de pulvérisation sont orientés dans des directions différentes par rapport à l'axe (11).

3. Dispositif selon la revendication précédente, **caractérisé en ce que** les buses de pulvérisation (10) sont disposées de manière concentrique autour de l'axe (11).

4. Dispositif selon l'une quelconque des revendications précédentes, **caractérisé en ce que** la/les buse(s) de pulvérisation (10) est/sont orientée(s) par rapport à l'axe (11) de sorte que le liquide de nettoyage (14) quittant la/les buse(s) de pulvérisation (10) pendant le fonctionnement de l'agencement de buses de pulvérisation (8) provoque par effet de recul la rotation de la/des buse(s) de pulvérisation autour de l'axe (11), de sorte que la/les buse(s) de pulvérisation (10) soit/soient entraînée(s) en rotation sans unité d'entraînement supplémentaire.

5. Dispositif selon l'une quelconque des revendications précédentes, **caractérisé en ce que** l'entraînement (3) du tambour et l'entraînement (7) de l'agencement de buses de pulvérisation (8) sont accordés l'un avec l'autre, sachant qu'une modification de la vitesse de rotation du tambour filtrant (2) entraîne également une modification de la vitesse de déplacement de l'agencement de buses de pulvérisation (8) et/ou inversement.

6. Dispositif selon l'une quelconque des revendications précédentes, **caractérisé en ce que** l'entraînement (7) de l'agencement de buses de pulvérisation (8) est conçu pour déplacer le support (9) le long du guide (6), au moins en certaines sections, à une vitesse maximale de 10 m/s, de préférence à une vitesse maximale de 7 m/s, pendant le fonctionnement du système de nettoyage (5).

7. Dispositif selon l'une quelconque des revendications précédentes, **caractérisé en ce que** la buse de pulvérisation (10) présente un orifice de sortie (13) pour la sortie du liquide de nettoyage (14), dans lequel la plus petite distance entre l'orifice de sortie (13) et la surface filtrante (1) a une valeur comprise entre 1 cm et 20 cm, de préférence entre 5 cm et 15 cm.

8. Dispositif selon l'une quelconque des revendications précédentes, **caractérisé en ce que** la plus petite distance entre l'orifice de sortie (13) de la buse de pulvérisation (10) et l'axe (11) de la buse de pulvérisation (10) a une valeur comprise entre 5 cm et 30 cm, de préférence entre 10 cm et 25 cm.

9. Procédé pour nettoyer la surface filtrante (1) d'un tambour filtrant (2) monté de manière rotative, qui sert à éliminer des impuretés d'un liquide, de préférence d'une eau résiduaire,
- dans lequel le tambour filtrant (2) est mis en rotation autour d'un axe de rotation (4) au moyen d'un entraînement (3) de tambour,
- dans lequel un agencement de buses de pulvérisation (8) est déplacé en va-et-vient par rapport à la surface filtrante (1) sur une trajectoire de déplacement prédéterminée, et
- dans lequel un liquide de nettoyage (14) est pulvérisé sur la surface filtrante (1) au moyen d'au moins une buse de pulvérisation (10) d'un agencement de buses de pulvérisation (8) afin d'éliminer de la surface filtrante (1) les résidus présents sur la surface filtrante (1),
**caractérisé en ce que**
la buse de pulvérisation (10) est déplacée au moins temporairement autour d'un axe (11) tandis qu'elle est déplacée en va-et-vient le long de ladite trajectoire de déplacement et tourne plusieurs fois en cercle par rapport à l'axe (11), tandis que le support (9) est déplacé une fois en va-et-vient entre des points d'extrémité délimitant le guide (6) des deux côtés.

10. Procédé selon la revendication précédente, **caractérisé en ce que** le liquide de nettoyage (14) sort de la buse de pulvérisation (10) de telle manière qu'il provoque, par effet de recul, un mouvement, de préférence une rotation, de la buse de pulvérisation (10) autour de l'axe (11).

11. Procédé selon la revendication 9 ou 10, **caractérisé en ce que** la buse de pulvérisation (10) tourne autour de l'axe (11) à une vitesse de rotation dont la valeur est comprise entre 0,1 tour par seconde et 100 tours par seconde, de préférence entre un tour par seconde et 30 tours par seconde.

12. Procédé selon l'une quelconque des revendications 9 à 11, **caractérisé en ce que** le tambour filtrant (2) est entraîné pendant le nettoyage à une vitesse de rotation dont la valeur est comprise entre 0,1 tour par minute et 10 tours par minute, de préférence entre un tour par minute et 8 tours par minute.

13. Procédé selon l'une quelconque des revendications 9 à 12, **caractérisé en ce que** l'agencement de buses de pulvérisation (8), pendant le nettoyage, est déplacé au moins en certaines sections le long de la trajectoire de déplacement à une vitesse d'au plus 10 m/s, de préférence à une vitesse d'au plus 7 m/s.

14. Procédé selon l'une quelconque des revendications 9 à 13, **caractérisé en ce qu'**une modification de la vitesse de rotation du tambour filtrant (2) entraîne également une modification de la vitesse de déplacement de l'agencement de buses de pulvérisation (8) et/ou inversement.

15. Procédé selon l'une quelconque des revendications 9 à 14, **caractérisé en ce que** la vitesse de déplacement de l'agencement de buses de pulvérisation (8) et la vitesse de rotation du tambour filtrant (2) sont accordées l'une avec l'autre de telle sorte que l'ensemble de la surface filtrante (1) soit pulvérisée au moins une fois avec le liquide de nettoyage (14) après un maximum de 20 tours du tambour filtrant (2), de préférence après un maximum de trois tours du tambour filtrant (2).

16. Procédé selon l'une quelconque des revendications 9 à 15, **caractérisé en ce que** le liquide de nettoyage (14) est soumis à une pression juste avant qu'il ne quitte la buse de pulvérisation (10), ladite pression ayant une valeur comprise entre 3 bars et 200 bars, de préférence entre 100 bars et 200 bars.
